# EUROPEAN PATENT APPLICATION

(11) **EP 1 562 181 A2**
(43) Date of publication of application: **10.08.2005**
(21) Application number: 05002405.8
(22) Date of filing: 04.02.2005
(51) Int. Cl.: G11B 5/02, G11B 5/706, G11B 5/39, G11B 19/28

(54) **Recording/reproducing method of magnetic disc**

(30) Priority: 06.02.2004 JP 2004030730
(71) Applicant: Fuji Photo Film Co., Ltd., Kanagawa (JP)
(72) Inventor: Saito, Shinji, Odawara-shi Kanagawa (JP); Noguchi, Hitoshi, Odawara-shi Kanagawa (JP)
(74) Representative: HOFFMANN - EITLE

(57) **Abstract**

A method comprising recording or reproducing a magnetic disc with a recording head or a reproducing head, the magnetic disc having a diameter of from 1.91 to 3.81 cm and comprising, in this order, a flexible support, a substantially nonmagnetic lower layer and a magnetic layer containing hexagonal ferrite magnetic powder and a binder, wherein relative speeds in all recording area of the magnetic disc are within a range of from 1.0 to 8.0 m/s when the recording or reproducing is conducted.

## Description

### FIELD OF THE INVENTION

The present invention relates to recording/reproducing method of a magnetic disc for high density recording with a coating type medium. More specifically, the invention relates to recording/reproducingmethodof a miniaturized magnetic disc adopting a medium containing hexagonal ferrite magnetic powder and an MR head.

### BACKGROUND OF THE INVENTION

Devices handling still pictures and motion pictures such as digital still cameras and cam coders have been miniaturized, so that the miniaturization of recording media is also required. Semi conductor memories small involume are mainlyused indigital cameras, but these semiconductor memories are small in capacity and expensive.

Hard discs are miniaturized and the capacity is sufficiently high but they are also expensive, and many drives are integrated with media, so that they are difficult to handle as removable media. Further, there is the great possibility of head crash and the like.

On the other hand in optical discs, an optical pickup is bulky as compared with a magnetic head, so that drives are particularly difficult to make thin and devices are hard to be miniaturized. Further, since optical recording generally takes time as compared with magnetic recording, the transfer rate of recording is slow, and the transfer rate becomes worse than ever particularly when the diameter of a disc is made small for advancing miniaturization. A cam coder principally for recording a motion picture is as a matter of course, even a digital camera has come to record a motion picture nowadays.

Although it depends upon the compression system, recording rate of 8 Mbit/s or less is not sufficient in view of an image quality, so that it is difficult for optical discs to satisfy the specification. A compression system capable of obtaining a high picture quality with a low transfer rate is under development, but the same high transfer rate as above is required for copying data.

On the other hand, discs having a diameter of 3.5 inches (1 inch is 2.54 cm) or so, e.g., Zip and LS120, are now put to practical use in flexible magnetic discs, but those capable of being carried on a digital camera and a cam coder are not developed yet. Clik! (product name manufactured by Iomega Corporation) has a relatively small diameter as 1.8 inches but this is a little large to be carried on a digital camera. Further, the capacity of 40 MB is too little for recording a motion picture and the transfer rate is also low. In addition, durable alloy powders are used in the above magnetic disc, and the durability of the disc deteriorates particularly when a disc diameter is lessened.

### SUMMARY OF THE INVENTION

An object of the present invention is to realize a transfer rate capable of obtaining a high picture quality and a sufficient capacity capable of recording motion pictures, to thereby provide practicable and reliable recording and reproducing methods for a flexible magnetic disc system by using a magnetic disc having a diameter of from 1.91 to 3.81 cm (from 0.75 to 1.5 inches) suitable for a recording medium of a digital camera and a cam coder in which miniaturization has been progressed.

The above object of the invention can be achieved by the following means.
(1) A method comprising recording or reproducing a magnetic disc with a recording head or a reproducing head, the magnetic disc having a diameter of from 1.91 to 3.81 cm and comprising, in this order, a flexible support, a substantially nonmagnetic lower layer and a magnetic layer containing hexagonal ferrite magnetic powder and a binder, wherein relative speeds in all recording area of the magnetic disc are within a range of from 1. 0 to 8 .0 m/s when the recording or reproducing is conducted.
(2) The method as described in the above item (1),
wherein the minimum transfer rate is 8 Mbit/s or more.

The recording and reproducing methods of the invention realize a transfer rate capable of obtaining a high picture quality and a sufficient capacity capable of recording motion pictures and are excellent in practicability and reliability by recording and reproducing a flexible magnetic disc having a diameter of from 1.91 to 3.81 cm (from 0.75 to 1.5 inches) suitable for a recording medium of a miniaturized digital camera and a cam coder in a magnetic recording system adopting a specific relative speed and an MR head.

The drives using a flexible magnetic disc having a diameter prescribed in the invention can be internally stored in various mobile devices not only a digital camera and a cam coder but also a PDA (personal digital assistant), a digital audio player, a notebook-sizedpersonal computer and a mobile phone. Further, it becomes possible to exchange data between a variety of storages, e.g. , image and sound devices by adapting the drives to the slot sizes of various semiconductor memories such as PCMCIA card slots and CF cards.

### DETAILED DESCRIPTION OF THE INVENTION

In the invention, the relative speed at the time of recording and reproducing means the speed in a tangential direction of the concentric circle of a disc on the position of the magnetic disc surface corresponding to the recording head or the reproducing head, relative to the speed of the recording head or the reproducing head in the tangential direction, and the relative speeds at all positions of the recording area of the magnetic disc are controlled within the range of from 1.0 to 8.0 m/s, preferably from 1.5 to 5 m/s.

As the reproducing head, an AMR head is preferred, and for obtaining higher density characteristics, a GMR head is more preferred.

All recording area is not particularly specified, but it is generally preferred that from 0.5 to 1 mm or so from the outermost periphery is a non-recording area. Since there is a center hole, it is preferred that the innermost diameter of a recording area is the range of from 60 to 30% of the disc diameter.

The reason for the effect of the invention is not clear but it is thought as follows.

It is known that hexagonal ferrite magnetic powders are excellent in high frequency characteristics and sufficient SN can be obtained with high linear recording density.

Since output is proportional to the variation per the unit time of a magnetic field, it tends to lower when the relative speeds becomes low and the recording frequency becomes low, but the spacing lowers as the flying height of the head also lessens, so that it is thought that SN does not deteriorate very much.

Further, it is found that a magnetic disc using hexagonal ferrite magnetic powder is superior in durability to a magnetic disc using alloy powder. This is presumably because hexagonal ferritemagneticpowder is an oxide and harder than alloy powder.

However, when at least one relative speed of the relative speeds at all positions of the recording area is lower than 1.0 m/s, not only a desired transfer rate cannot be obtained but also the durability extremely deteriorates even when hexagonal ferrite magnetic powder is used. This is perhaps due to the fact that the touch of the magnetic disc and the head becomes strong, and the friction coefficient rises, as a result, the durability deteriorates.

On the other hand, when at least one relative speed of the relative speeds at all positions of the recording area exceeds 8 m/s, the transfer rate becomes sufficiently great, but not only the SN ratio suddenly lowers but also the durability deteriorates. This is thought due to the fact that the flying height of the head sharply increases when the relative speed rises, and the average spacing increases, so that the SN ratio lowers. The reason for the deterioration of durability is presumably that the rotating condition of the flexible disc becomes unstable by high speed rotation of the disc and run out occurs, and the head and the magnetic disc are brought into contact irregularly and strongly.

In the recording and reproducingmethods of the invention, in the relative speeds, the minimum transfer rate for recording and reproducing motion picture is preferably 8 Mbit/s or more, more preferably 15 Mbit/s or more.

A magnetic disc for use in the invention is described below.

### Magnetic layer:

In a magnetic disc according to the invention, a magnetic layer is generally provided on both sides of a support, but it may be provided on one side.

The magnetic layer provided on one side of a support may comprise a single layer or a plurality of layers each having a different composition. It is preferred in the invention to provide a substantially nonmagnetic lower layer (it is also referred to as a nonmagnetic layer or a lower layer) between a support and a magnetic layer by wet-on-wet or wet-on-dry coating. A magnetic layer is also referred to as an upper layer or an upper magnetic layer.

Hexagonal ferrite powder is used in a magnetic layer as ferromagnetic powder.

As hexagonal ferrite magnetic powders, magnetoplumbite type (M type) hexagonal ferrites are preferably used, e.g., barium ferrite, strontium ferrite, lead ferrite, calcium ferrite and various substitution products of these ferrites are exemplified. Hexagonal ferrite powders may contain, in addition to the prescribed atoms, the following atoms, e.g., Al, Si, S, Sc, Ti, V, Cr, Cu, Y, Mo, Rh, Pd, Ag, Sn, Ba, Ta, W, Re, Au, Pb, Bi, La, Ce, Pr, Nd, P, Co, Mn, Zn, Ni, Sr, B, Ge and Nb. In general, hexagonal ferrite powders containing the following elements canbeused, e.g., Co-Ti, Co-Ti-Zr, Co-Nb, Co-Ti-Zn, Co-Zn-Nb, Ni-Ti-Zn, Nb-Zn, Ni-Ti, Zn-Ti and Zn-Ni. From the viewpoint of SFD, pure M type ferrites are preferred to composite ferrites containing a lot of spinel layers. For controlling coercive force, various methods are known, e.g., controlling composition, tabular diameter and tabular thickness, controlling the thickness of spinel phase of hexagonal ferrite, controlling the amount of the substitution element of spinel phase, and controlling the substitution site of spinel phase.

It is preferred in the invention that the average tabular diameter of hexagonal ferrite magnetic powders is from 15 to 35 nm, and the coefficient of variation of the tabular diameter is from 0 to 30%. The tabular thickness of the magnetic powders is generally from 2 to 15 nm, and particularly preferably from 4 to 10 nm. The average tabular ratio of the magnetic powders is preferably from 1.5 to 4.5, more preferably from 2 to 4.2. When the average tabular diameter in the above range is secured, the specific surface area becomes appropriate range and dispersion can be performed easily. The specific surface area (S_{BET}) of hexagonal ferrite magnetic powders is preferably from 40 to 100 m²/g, more preferably from 45 to 90 m²/g. When the specific surface area is in this range, noise lowers and dispersion becomes easy, which results in preferred surface properties. The moisture content of hexagonal ferrite powders is preferably from 0.3 to 2.0%. It is preferred to optimize the moisture content of the magnetic powders by the kinds of binders. It is also preferred to optimize the pH of the magnetic powders by the combinations with the binders to be used. The pH is from 5.0 to 12, preferably from 5.5 to 10.

These ferromagnetic powders may be treated with the later-described dispersants, lubricants, surfactants and antistatic agents prior to dispersion.

SFD of ferromagnetic powders themselves is preferably small, and it is necessary to make Hc distribution of ferromagnetic powders narrow. When SFD of a tape is small, magnetic flux revolution becomes sharp and peak shift becomes small, which is suitable for high density digital magnetic recording. To achieve small Hc distribution, making particle size distribution of goethite in ferromagnetic metal powders good, using monodispersed α-Fe₂O₃, and preventing sintering among particles are effective methods.

### Lower layer:

A lower layer is described in detail below. A lower layer preferably comprises nonmagnetic inorganic powder and a binder as main components. Nonmagnetic inorganic powder for use in a lower layer can be selected from inorganic compounds, e.g., metallic oxide, metallic carbonate, metallic sulfate, metallic nitride, metallic carbide and metallic sulfide. The examples of inorganic compounds are selected from the following compounds and they can be used alone or in combination, e.g., α-alumina having an α conversion rate of 90% ormore, β-alumina, γ-alumina, θ-alumina, silicon carbide, chromium oxide, cerium oxide, α-iron oxide, hematite, goethite, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate, and molybdenum disulfide. Of these compounds, titanium dioxide, zinc oxide, iron oxide and barium sulfate are particularly preferred for the reason that they have small particle size distribution and various means for imparting functions, and titanium dioxide and α-iron oxide are more preferred. These nonmagnetic inorganic powders preferably have an average particle size of from 0.005 to 2 µm. If necessary, a plurality of nonmagnetic inorganic powders different in average particle size may be combined, or a single nonmagnetic inorganic powder may have broad particle size distribution so as to attain the same effect as such a combination. Nonmagnetic inorganic powders particularly preferably have an average particle size of from 0.01 to 0.2 µm. In particular, when nonmagnetic inorganic powders are granular metallic oxides, the average particle size of the powders is preferably 0.08 µm or less, and when the nonmagnetic inorganic powders are acicular metallic oxides, the average long axis length is preferably 0.3 µm or less, more preferably 0.2 µm or less. Nonmagnetic inorganic powders for use in the invention have a tap density of generally from 0.05 to 2 g/ml, preferably from 0.2 to 1.5 g/ml; a moisture content of generally from 0.1 to 5 mass% (weight%), preferably from 0.2 to 3 mass%, and more preferably from 0. 3 to 1.5 mass%; a pH value of generally from 2 to 11, and particularly preferably between 5.5 and 10; a specific surface area of generally from 1 to 100 m²/g, preferably from 5 to 80 m²/g, and more preferably from 10 to 70 m²/g.

Nonmagnetic inorganic powders for use in the invention have a crystallite size of preferably from 0.004 to 1 µm, and more preferably from 0.04 to 0.1 µm; an oil absorption amount using DBP (dibutyl phthalate) of generally from 5 to 100 ml/100 g, preferably from 10 to 80 ml/100 g, and more preferably from 20 to 60 ml/100 g; and a specific gravity of generally from 1 to 12, and preferably from 3 to 6. The shape of nonmagnetic inorganic powders may be any of an acicular, spherical, polyhedral and tabular shapes. Nonmagnetic inorganic powders preferably have a Mohs' hardness of from 4 to 10. The SA (stearic acid) adsorption amount of nonmagnetic inorganic powders is from 1 to 20 µmol/m², preferably from 2 to 15 µmol/m², and more preferably from 3 to 8 µmol/m². The pH is preferably 3 and 6. The surfaces of nonmagnetic inorganic powders are preferably covered with Al₂O₃, SiO₂, TiO₂, ZrO₂, SnO₂, Sb₂O₃, ZnO or Y₂O₃. Al₂O₃, SiO₂, TiO₂ and ZrO₂ are particularly preferred in dispersibility, and Al₂O₃, SiO₂ and ZrO₂ are still more preferred. They can be used in combination or can be used alone. According to purposes, a layer subjected to surface treatment by coprecipitation may be used. Alternatively, the surfaces of particles may be covered with alumina previously, and then the alumina-covered surface may be covered with silica, or vice versa, according to purposes. A surface-covered layer may be a porous layer, if necessary, but a homogeneous and dense surface is generally preferred.

The specific examples of nonmagnetic inorganic powders for use in a lower layer in the invention and the producing methods of them are disclosed in WO 98/35345.

A desired micro Vickers hardness can be obtained by adding carbon blacks to a lower layer, surface electrical resistance (Rs) and light transmittance can be reduced as well, which are well-known effects. It is also possible to bring about the effect of stocking a lubricant by adding carbon blacks to a lower layer. Furnace blacks for rubbers, thermal blacks for rubbers, carbon blacks for coloring and acetylene blacks can be used as carbon blacks. Carbon blacks for use in a lower layer should optimize the following characteristics by the desired effects and further effects can be obtained by the combined use in some cases.

Carbon blacks for use in a lower layer according to the invention have a specific surface area of generally from 100 to 500 m²/g, preferably from 150 to 400 m²/g, a DBP oil absorption amount of generally from 20 to 400 ml/100 g, preferably from 30 to 400 ml/100 g, an average particle size of generally from 5 to 80 nm, preferably from 10 to 50 nm, and more preferably from 10 to 40 nm, and a small amount of carbon black having an average particle size of greater than 80 nm may be contained in a lower layer. Carbon blacks for use in a lower layer preferably have pH of from 2 to 10, a moisture content of from 0.1 to 10%, and a tap density of from 0.1 to 1 g/ml.

The specific examples of carbon blacks for use in a lower layer in the invention are disclosed in WO 98/35345. Carbon blacks can be used within the range not exceeding 50 mass% of the above-described nonmagnetic inorganic powders (exclusive of carbon blacks) and not exceeding 40% of the total mass of a nonmagnetic layer. Carbon blacks can be used alone or in combination. With respect to carbon blacks that can be used in the invention, the description, e.g., in Carbon Black Binran (Handbook of Carbon Blacks), compiled by Carbon Black Kyokai can be referred to.

Organic powders can be used in a lower layer according to purposes. The examples of organic powders include acrylic styrene resin powders, benzoguanamine resin powders, melamine resin powders, and phthalocyanine pigments. In addition, polyolefin resin powders, polyester resin powders, polyamide resin powders, polyimide resin powders and polyethylene fluoride resin powders can also be used. The producing methods of these organic powders are disclosed in JP-A-62-18564 and JP-A-60-255827 (the term "JP-A" as used herein refers to an "unexamined published Japanese patent application".).

The binder resins, lubricants, dispersants, additives, solvents, dispersing methods and others used in a magnetic layer described later can be used in a lower layer. In particular, with respect to the amounts and the kinds of binder resins, additives, the amounts and the kinds of dispersants, well-known techniques regarding a magnetic layer can be applied to a lower layer.

### Binder:

As the binders for use in the invention, well-known thermoplastic resins, thermosetting resins, reactive resins and mixtures of these resins are used.

The thermoplastic resins are resins having a glass transition temperature of -100 to 150°C, a number average molecular weight of from 1, 000 to 200,000, preferably from 10,000 to 100,000, and the degree of polymerization of from about 50 to about 1,000.

The examples of these thermoplastic resins include polymers or copolymers containing, as the constituting unit, vinyl chloride, vinyl acetate, vinyl alcohol, maleic acid, acrylic acid, acrylic ester, vinylidene chloride, acrylonitrile, methacrylic acid, methacrylic ester, styrene, butadiene, ethylene, vinylbutyral, vinyl acetal or vinyl ether; polyurethane resins and various rubber resins. The examples of thermosetting resins and reactive resins include phenolic resins, epoxy resins, curable type polyurethane resins, urea resins, melamine resins, alkyd resins, acrylic reactive resins, formaldehyde resins, silicone resins, epoxy-polyamide resins, mixtures of polyester resins and isocyanate prepolymers, mixtures of polyester polyol and polyisocyanate, and mixtures of polyurethane and polyisocyanate. These resins are described in detail in Plastic Handbook, Asakura Shoten. It is also possible to use well-known electron beam-curable type resins in each layer. The examples of these resins and manufacturing methods are disclosed in detail in JP-A-62-256219. These resins can be used alone or in combination. The examples of preferred combinations include at least one resin selected from vinyl chloride resins, vinyl chloride-vinyl acetate copolymers, vinyl chloride-vinyl acetate-vinyl alcohol copolymers, and vinyl chloride-vinyl acetate-maleic anhydride copolymers with a polyurethane resin, and combinations of these resins with polyisocyanate.

Polyurethane resins having well known structures, e.g., polyester polyurethane, polyether polyurethane, polyether polyester polyurethane, polycarbonate polyurethane, polyester polycarbonate polyurethane and polycaprolactone polyurethane can be used. For the purpose of obtaining further excellent dispersibility and durability with respect to all the binders described above, it is preferred to use at least one polar group selected from the following and introduced by copolymerization or addition reaction according to necessity, e. g. , -COOM, -SO₃M, -OSO₃M, -P=O (OM)₂, -O-P=O (OM)₂ (wherein M represents a hydrogen atom or an alkali metal salt group), -NR₂, -N⁺R₃ (wherein R represents a hydrocarbon group), an epoxy group, -SH and -CN. The content of the polar group is from 10⁻¹ to 10⁻⁸ mol/g, preferably from 10⁻² to 10⁻⁶ mol/g. It is preferred for polyurethane resins to have at least one OH group at each terminal of a polyurethane molecule, i.e., two or more in total, besides the above polar groups. Since OH groups form a three dimensional network structure by crosslinking with a polyisocyanate curing agent, they are preferably contained in a molecule as many as possible. In particular, it is preferred that OH groups are present at terminals of a molecule, since the reactivity with the curing agent becomes high. It is preferred for polyurethane to have three or more OH groups, particularly preferably four ormore OH groups, at terminals of a molecule. When polyurethane is used in the invention, the polyurethane has a glass transition temperature of generally from -50 to 150°C, preferably from 0 to 100°C, and particularly preferably from 30 to 100°C, breaking extension of from 100 to 2,000%, breaking stress of generally from 0.05 to 10 kg/mm² (from 0.49 to 98 MPa), and a yielding point of from 0.05 to 10 kg/mm² (from 0.49 to 98 MPa). Due to these physical properties, a coating film having good mechanical properties can be obtained.

The specific examples of binders for use in the invention include as vinyl chloride copolymers VAGH, VYHH, VMCH, VAGF, VAGD, VROH, VYES, VYNC, VMCC, XYHL, XYSG, PKHH, PKHJ, PKHC and PKFE (manufactured by Union Carbide Co., Ltd.), MPR-TA, MPR-TA5, MPR-TAL, MPR-TSN, MPR-TMF, MPR-TS, MPR-TM and MPR-TAO (manufactured by Nisshin Chemical Industry Co. , Ltd.), 1000W, DX80, DX81, DX82, DX83 and 100FD (manufactured by Denki Kagaku Co. , Ltd.), MR-104, MR-105, MR-110, MR-100, MR-555 and 400X-110A (manufactured by Nippon Zeon Co., Ltd.) ; and as polyurethane resins Nippollan N2301, N2302 and N2304 (manufactured by Nippon Polyurethane Industry Co., Ltd.); Pandex T-5105, T-R3080, T-5201, Burnock D-400, D-210-80, Crisvon 6109 and 7209 (manufacturedbyDainippon Ink and Chemicals Inc.), Vylon UR8200, UR8300, UR8700, RV530 and RV280 (manufactured by Toyobo Co., Ltd.), polycarbonate polyurethane, Daipheramine 4020, 5020, 5100, 5300, 9020, 9022 and 7020 (manufactured by Dainichiseika Color & Chemicals Mfg. Co., Ltd), polyurethane, MX5004 (manufactured by Mitsubishi Kasei Corp.), polyurethane, Sanprene SP-150 (manufactured by Sanyo Chemical Industries, Ltd.), and polyurethane, Saran F310 and F210 (manufactured by Asahi Kasei Corporation).

The amount of binders for use in a nonmagnetic layer and a magnetic layer is from 5 to 50 mass%, preferably from 10 to 30 mass%, respectively based on the nonmagnetic inorganic powder and the magnetic powder. When vinyl chloride resins are used, the amount thereof is from 5 to 30 mass%, when polyurethane resins are used, the amount thereof is from 2 to 20 mass%, and when polyisocyanate is used, the amount thereof is from 2 to 20 mass%, and it is preferred to use them in combination, however, for instance, when the corrosion of heads is caused by a slight amount of chlorine due to dechlorination, it is possible to use polyurethane alone or a combination of polyurethane and isocyanate alone.

The magnetic disc in the invention may comprise two or more layers, and the amount of binder, the amounts of vinyl chloride resin, polyurethane resin, polyisocyanate or other resins contained in a binder, the molecular weight of each resin constituting the magnetic layer, the amount of polar groups, or the physical characteristics of the above-described resins can of course be varied in each layer according to necessity. These factors should be rather optimized in each layer. Well-known techniques with respect to multilayer magnetic layers can be used in the invention. For example, when the amount of a binder is varied in each layer, it is effective to increase the amount of a binder contained in a magnetic layer to reduce scratches on the magnetic layer surface. For improving the head touch against the head, it is effective to increase the amount of the binder in a nonmagnetic layer to impart flexibility.

The examples of polyisocyanates for use in the invention include isocyanates, e.g., tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate and triphenylmethane triisocyanate; products of these isocyanates with polyalcohols; and polyisocyanates formed by condensation reaction of isocyanates. These isocyanates are commercially available under the trade names of Coronate L, Coronate HL, Coronate 2030, Coronate 2031, Millionate MR and Millionate MTL (manufacturedbyNippon Polyurethane Co. , Ltd.), Takenate D-102, Takenate D-110N, Takenate D-200 and Takenate D-202 (manufactured by Takeda Chemical Industries, Ltd.), and Desmodur L, Desmodur IL, Desmodur N and Desmodur HL (manufactured by Sumitomo Bayer Co., Ltd.). These compounds maybe used alone, or in combination of two or more in each layer taking advantage of the difference in curing reactivity.

### Carbon black, abrasive:

Carbon blacks for use in a magnetic layer in the present invention include furnace blacks for rubbers, thermal blacks for rubbers, carbon blacks for coloring, and acetylene blacks. Carbon blacks for use in the present invention have a specific surface area of from 5 to 500 m²/g, a DBP oil absorption amount of from 10 to 400 ml/100 g, an average particle size of from 5 to 300 nm, a pH value of from 2 to 10, a moisture content of from 0.1 to 10%, and a tap density of from 0.1 to 1 g/ml. The specific examples of these carbon blacks are disclosed in WO 98/35345.

Carbon blacks can serve various functions such as prevention of static charges of a magnetic layer, reduction of a friction coefficient, impartation of a light-shielding property and improvement of film strength. Such functions vary according to the kind of carbon blacks to be used. Accordingly, when the invention takes a multilayer structure, it is of course possible to select and determine the kind, the amount and the combination of the carbon blacks to be added to each layer on the basis of the above-described various properties such as the particle size, the oil absorption amount, the electrical conductance and the pH value, or these shouldbe rather optimized in each layer.

It is preferred to use diamonds as abrasives in the invention. The average particle size of the diamond particles used in the invention is from 1/5 to 2 times the magnetic layer thickness, preferably from 1/2 to 1.5 times, more preferably from 0.8 to 1.2 times. The blending amount of diamond is from 0.1 to 5.0 mass% to the ferromagnetic powder, preferably from 0.5 to 3 mass%.

Besides diamonds, other abrasives can be used in combination in a magnetic layer in the invention. Well-known materials essentially having a Mohs' hardness of 6 or higher can be used as abrasives alone or in combination, e.g., α-alumina having an α-conversion rate of 90% or more, β-alumina, silicon carbide, chromium oxide, cerium oxide, α-iron oxide, corundum, silicon nitride, silicon carbide, titanium carbide, titanium oxide, silicon dioxide, and boron nitride. The composites of these abrasives (abrasives obtained by surface- treating with other abrasives) may also be used. Compounds or elements other than their main components are often contained in these abrasives, but the intended effects can be attained so long as the content of the main component is 90% or more . These abrasives preferably have an average particle size of from 0.01 to 2 µm and, in particular, for improving electromagnetic characteristics, it is preferred to use abrasives having narrow particle size distribution. For improving durability, abrasives respectively having different particle sizes may be combined according to necessity, or a single abrasive having broad particle size distribution may be used so as to attain the same effect as such a combination. Abrasives for use in the invention preferably have a tap density of from 0.3 to 2 g/ml, a moisture content of from 0.1 to 5%, a pH value of from 2 to 11, and a specific surface area of from 1 to 30 m²/g. The configurations of abrasives for use in the invention may be any of acicular, spherical and die-like configurations, but abrasives having a configuration partly with edges are preferred for their high abrasive property. The specific examples of these abrasives are disclosed in WO 98/35345. The particle sizes and the amounts of abrasives to be added to a magnetic layer and a nonmagnetic layer should be independently set at optimal values.

### Additive:

As additives for use in a magnetic layer and a nonmagnetic layer in the invention, those having a lubricating effect, an antistatic effect, a dispersing effect and a plasticizing effect are used and comprehensive improvement of performances can be contrived by combining additives. As additives having a lubricating effect, lubricants giving a remarkable action on agglutination caused by the friction of surfaces of materials with each other are used. Lubricants are classified into two types. Lubricants that are used for a magnetic disc cannot be judged completely whether they show fluid lubrication or boundary lubrication, but according to general concept they are classified into higher fatty acid esters, liquid paraffin and silicon derivatives which show fluid lubrication, and long chain fatty acids, fluorine surfactants and fluorine-containing polymers which show boundary lubrication. In a coating type magnetic recording medium, lubricants exist in a state dissolved in a binder or in a state of partly being adsorbed onto the surface of ferromagnetic powder, and they migrate to the surface of a magnetic layer. The speed of migration depends upon whether the compatibility of a binder and a lubricant is good or bad. The speed of migration is slow when the compatibility of a binder and a lubricant is good and the migration speed is fast when the compatibility is bad. As one idea as to good or bad of the compatibility, there is a means of comparison of dissolution parameters of a binder and a lubricant. A non-polar lubricant is effective for fluid lubrication and a polar lubricant is effective for boundary lubrication.

In the present invention, it is preferred to use a higher fatty acid ester showing fluid lubrication and a long chain fatty acid showing boundary lubrication each having different characteristics in combination, and it is more preferred to combine at least three of these lubricants. Solid lubricants can also be used in combination with these lubricants.

The examples of solid lubricants that can be used in combination include molybdenum disulfide, tungsten graphite disulfide, boron nitride and graphite fluoride. The examples of long chain fatty acids showing boundary lubrication include monobasic fatty acids having from 10 to 24 carbon atoms (they may contain an unsaturated bond or may be branched) and metal salts of these monobasic fatty acids (e.g., with Li, Na, K or Cu). The examples of fluorine surfactants and fluorine-containing polymers include fluorine-containing silicones, fluorine-containing alcohols, fluorine-containing esters, fluorine-containing alkyl sulfates and alkali metal salts of them. The examples of higher fatty acid esters showing fluid lubrication include fatty acid monoesters, fatty acid diesters and fatty acid triesters composed of a monobasic fatty acid having from 10 to 24 carbon atoms (which may contain an unsaturated bond or may be branched) and any one of mono-, di-, tri-, tetra-, penta- andhexa-alcohols having from 2 to 12 carbon atoms (which may contain an unsaturated bond or may be branched), and fatty acid esters of monoalkyl ethers of alkylene oxide polymers. In addition to the above, the examples further include liquid paraffin, and as silicone derivatives, silicone oils, e.g., dialkylpolysiloxane (the alkyl group has from 1 to 5 carbon atoms), dialkoxypolysiloxane (the alkoxyl group has from 1 to 4 carbon atoms), monoalkyl - monoalkoxypolysiloxane (the alkyl group has from 1 to 5 carbon atoms and the alkoxyl group has from 1 to 4 carbon atoms), phenylpolysiloxane, and fluoroalkylpolysiloxane (the alkyl group has from 1 to 5 carbon atoms), silicones having a polar group, fatty acid-modified silicones, and fluorine-containing silicones.

The examples of other lubricants include alcohols, e.g. , mono-, di-, tri-, tetra-, penta- and hexa-alcohols having from 12 to 22 carbon atoms (which may contain an unsaturated bond or may be branched), alkoxy alcohols having from 12 to 22 carbon atoms (which may contain an unsaturatedbond or maybe branched), and fluorine-containing alcohols, polyethylene waxes, polyolefins such as polypropylene, ethylene glycols, polyglycols such as polyethylene oxide waxes, alkyl phosphates and alkali metal salts of alkyl phosphates, alkyl sulfates and alkali metal salts of alkyl sulfates, polyphenyl ethers, fatty acid amides having from 8 to 22 carbon atoms, and aliphatic amines having from 8 to 22 carbon atoms.

The examples of additives having an antistatic effect, a dispersing effect and a plasticizing effect include phenylphosphonic acid, specifically "PPA" (manufactured by Nissan Chemical Industries, Ltd.), α-naphthylphosphoric acid, phenylphosphoric acid, diphenylphosphoric acid, p-ethyl-benzenephosphonic acid, phenylphosphinic acid, aminoquinones, various kinds of silane coupling agents, titanium coupling agents, fluorine-containing alkyl sulfates and alkali metal salts of them.

Lubricants that are particularly preferably used in the invention are fatty acids and fatty acid esters, and the specific examples are disclosed in WO 98/35345. Besides the above, other different lubricants and additives can be used in combination as well.

In addition to the above additives, nonionic surfactants, e.g., alkylene oxides, glycerols, glycidols and alkylphenolethylene oxide adducts; cationic surfactants, e.g., cyclic amines, ester amides, quaternary ammonium salts, hydantoin derivatives, heterocyclic rings, phosphoniums and sulfoniums; anionic surfactants containing an acid group, such as carboxylic acid, sulfonic acid, phosphoric acid, a sulfuric ester group and a phosphoric ester group; and amphoteric surfactants, e.g. , amino acids, aminosulfonicacids, sulfuricestersorphosphoric esters of amino alcohols, and alkylbetaines can also be used. These surfactants are described in detail in Kaimen Kasseizai Binran (Handbook of Surfactants) (published by Sangyo Tosho Co., Ltd.). These lubricants and antistatic agents need not be 100% pure and may contain impurities such as isomers, non-reacted products, byproducts, decomposed products and oxides, in addition to the main component. However, the content of impurities is preferably 30% or less, more preferably 10% or less.

As disclosed in WO 98/35345, it is preferred to use a monoester and a diester in combination as fatty acid esters in the present invention.

The surface of a magnetic layer has a C/Fe peak ratio of preferably from 5 to 100, particularly preferably from 5 to 80, when measured by Auger electron spectroscopy. The measuring conditions of Auger electron spectroscopy are as follows.
Instrument: Model PHI-660, manufactured by φ Co.

### Measuring conditions:

Primary electron beam accelerating voltage: 3 KV
Electric current of sample: 130 nA
Magnification: 250-fold
Inclination angle: 30°

The value of C/Fe peak is obtained as the C/Fe ratio by adding up the values obtained under the above conditions in the region of kinetic energy of from 130 to 730 eV three times and finding the strengths of KLL peak of the carbon and LMM peak of the iron as differentials.

The amount of the lubricants contained in each of an upper layer and a lower layer of a magnetic disc in the invention is preferably from 5 to 30 mass parts per 100 mass parts of the ferromagnetic powder and the nonmagnetic inorganic powder.

Lubricants and surfactants for use in the invention respectively have different physical functions. The kinds, amounts and combining proportions bringing about synergistic effects of these lubricants should be determined optimally in accordance with the purpose. A nonmagnetic layer and a magnetic layer can separately contain different fatty acids each having a different melting point so as to prevent bleeding out of the fatty acids to the surface, or different esters each having a different boiling point, a different melting point or a different polarity so as to prevent bleeding out of the esters to the surface. Also, the amount of the surfactant is controlled so as to improve the coating stability, or the amount of the lubricant in the intermediate layer is made larger so as to improve the lubricating effect. The examples are by no means limited thereto. In general, the total amount of lubricants is from 0.1 to 50 mass%, preferably from 2 to 25 mass%, based on the amount of the magnetic powder or the nonmagnetic powder.

All or a part of the additives to be used in the invention may be added to a magnetic coating solution or a nonmagnetic coating solution in any step of preparation. For example, additives may be blended with magnetic powder before a kneading step, may be added in a step of kneading magnetic powder, a binder and a solvent, may be added in a dispersing step, may be added after a dispersing step, or may be added just before coating. According to the purpose, there are cases of capable of attaining the object by coating all or a part of additives simultaneously with or successively after the coating of a magnetic layer. Further, according to purpose, a lubricant maybe coated on the surface of a magnetic layer after calendering treatment or after completion of slitting.

### Layer constitution:

The thickness of the support of a magnetic disc in the invention is generally from 2 to 100 µm, preferably from 2 to 80 µm.

An undercoat layer may be provided between a support, preferably a nonmagnetic flexible support, and a nonmagnetic or magnetic layer for adhesion improvement. The thickness of the undercoat layer is from 0.01 to 0.5 µm, preferably from 0.02 to 0.5 µm.

A backing layer may be provided on the side of a support opposite to the side having a magnetic layer for the purpose of providing static charge prevention and curling correction. The thickness of the backing layer is generally from 0.1 to 4 µm, preferably from 0.3 to 2.0 µm. Well-known undercoat layers and backing layers can be used for this purpose.

The thickness of a magnetic layer of the constitution comprising a lower layer and an upper layer in the invention is optimized by the amount of saturation magnetization of the head to be used, the head gap length and the recording signal band. The thickness of a lower layer is generally from 0.2 to 5.0 µm, preferably from 0.3 to 3.0 µm, and more preferably from 1.0 to 2.5 µm.

A lower layer exhibits the effect of the invention so long as it is substantially nonmagnetic even if, or intentionally, it contains a small amount of magnetic powder as the impurity, which is as a matter of course regarded as essentially the same constitution as in the invention. The terminology "substantially nonmagnetic" means that the residual magnetic flux density of a lower layer is 100 mT or less or the coercive force of a lower layer is 100 Oe (8 kA/m) or less, preferably the residual magnetic flux density and the coercive force are zero. When a lower layer contains magnetic powder, the content of the magnetic powder is preferably less than 1/2 of the total inorganic powders contained in the lower layer. In place of a nonmagnetic layer, a soft magnetic layer containing soft magnetic powder and a binder may be formed as a lower layer. The thickness of the soft magnetic layer is the same as the thickness of a lower layer as described above.

### Support:

A support for use in the invention preferably has a thermal shrinkage factor of preferably 0.5% or less at 100°C for 30 minutes, and a thermal shrinkage factor of preferably 0.5% or less at 80°C for 30 minutes, more preferably 0.2% or less, in every direction of the in-plane of the support. Further, the thermal shrinkage factors of the support at 100°C for 30 minutes and at 80°C for 30 minutes are preferably almost equal in every direction of the in-plane of the support with difference of not more than 10%. The support is preferably a nonmagnetic support. As nonmagnetic supports, well-known films such as polyesters (e.g., polyethylene terephthalate and polyethylene naphthalate), polyolefins, cellulose triacetate, polycarbonate; aromatic or aliphatic polyamide, polyimide, polyamideimide, polysulfone, and polybenzoxazole can be used. High strong supports such as polyethylene naphthalate and polyamide are preferably used. If necessary, a lamination type support as disclosed in JP-A-3-224127 can be used to vary the surface roughness of a magnetic layer surface and a base surface. These supports may be subjected in advance to surface activation treatment, e.g., corona discharge treatment, plasma treatment, adhesion assisting treatment, heating treatment or dust-removing treatment.

For achieving the object of the invention, it is preferred to use a support having a central plane average surface roughness (Ra) of 4.0 nm or less, preferably 2.0 nm or less, measured with a surface roughness meter TOPO-3D (a product of Veeco) . It is preferred that the support not only has a small central plane average surface roughness but also is free from coarse spines having a height of 0.5 µm or more. Surface roughness configuration is freely controlled by the size and the amount of a filler added to a support. The examples of fillers include oxides and carbonates of Ca, Si and Ti, and acrylic organic powders. A support for use in the invention preferably has a maximum height (Rmax) of 1 µm or less, a ten point average roughness (Rz) of 0.5 µm or less, a central plane peak height (Rp) of 0.5 µm or less, a central plane valley depth (Rv) of 0.5 µm or less, a central plane area factor (Sr) of from 10 to 90%, and average wavelength (λa) of from 5 to 300 µm. For obtaining desired electromagnetic characteristics and durability, the spine distribution on the surface of a support can be controlled arbitrarily by using fillers, e.g., the number of spines having sizes of from 0.01 to 1 µm can be controlled within the range of from 0 to 2,000 per 0.1 mm².

Supports for use in the invention have an F-5 value of preferably from 5 to 50 kg/mm² (from 49 to 490 MPa), a thermal shrinkage factor at 100°C for 30 minutes of preferably 3% or less, more preferably 1.5% or less, a thermal shrinkage factor at 80°C for 30 minutes of preferably 1% or less, more preferably 0.5% or less, a breaking strength of from 5 to 100 kg/mm² (from 49 to 980 MPa), an elastic modulus of from 100 to 2,000 kg/mm² (from 0.98 to 19.6 GPa), a temperature expansion coefficient of from 10⁻⁴ to 10⁻⁸/°C, preferably from 10⁻⁵ to 10⁻⁶/°C, and a humidity expansion coefficient of 10⁻⁴/RH% or less, preferably 10⁻⁵/RH% or less. These thermal characteristics, dimensional characteristics and mechanical strength characteristics are preferably almost equal in every direction of the in-plane of supports with difference of not more than 10%.

### Manufacturing method:

The manufacturing process of a magnetic coating solution of a magnetic disc in the invention comprises at least a kneading step, a dispersing step and optionally a blending step to be carried out before and/or after the kneading and dispersing steps. Each of these steps may be composed of two or more separate stages. All of the feedstock such as magnetic powder, nonmagnetic powder, a binder, a carbon black, an abrasive, an antistatic agent, a lubricant and a solvent for use in the invention may be added at any step at any time. Each feedstock may be added at two or more steps dividedly. For example, polyurethane can be added dividedly at a kneading step, a dispersing step, or a blending step for adjusting viscosity after dispersion. For achieving the object of the invention, conventionally well-known techniques can be performed partly with the above steps. Powerful kneading machines such as an open kneader, a continuous kneader, a pressure kneader or an extruder are preferably used in a kneading step. When a kneader is used, all or a part of the binder (preferably 30% or more of the total binders) is kneaded in the range of from 15 parts to 500 parts per 100 parts of the magnetic powder together with the magnetic powder or nonmagnetic powder. These kneading treatments are disclosed in detail in JP-A-1-106338 and JP-A-1-79274. For dispersing a magnetic layer coating solution and a nonmagnetic layer coating solution, glass beads can be used, but dispersing media having a high specific gravity, e.g., zirconia beads, titania beads and steel beads are preferred for this purpose. Optimal particle size and packing rate of these dispersing media have to be selected. Well-known dispersers can be used in the invention.

After these coating solutions are coated on a support, the magnetic disc is subjected to orientation, if necessary.

In the case of a magnetic disc, isotropic orienting property can be sufficiently obtained in some cases without performing orientation with orientating apparatus, but it is preferred to use well-known random orientation apparatus, e.g., disposing cobalt magnets diagonally and alternately or applying an alternating current magnetic field with a solenoid. Hexagonal ferrites have generally an inclination for three-dimensional random orientation of in-plane and in the perpendicular direction, but it is also possible to make in-plane two-dimensional random orientation. It is also possible to give isotropic magnetic characteristics in the circumferential direction by perpendicular orientation using well-known methods, e.g., using different pole and counter position magnets. In particular, perpendicular orientation is preferred when the disc is used in high density recording. Circumferential orientation can be performed using spin coating.

A web having a coated layer is preferably subjected to calendering treatment after coating and drying.

Heat resisting plastic rolls, e.g., epoxy, polyimide, polyamide and polyimideamide or metal rolls are used for calendering treatment. Metal rolls are preferably used for the treatment particularly when magnetic layers are coated on both surfaces of a support. The treatment temperature is preferably 50°C or more, more preferably 100°C or more. The linear pressure is preferably 200 kg/cm (196 kN/m) or more, more preferably 300 kg/cm (294 kN/m) or more.

### Physical properties:

Residual magnetic flux density × magnetic layer thickness of a magnetic disc according to the invention is preferably from 5 to 300 mT·µm. The coercive force (Hc) is preferably from 1,800 to 5,000 Oe (from 144 to 400 kA/m), more preferably from 1, 800 to 3, 000 Oe (from 144 to 240 kA/m). The distribution of the coercive force is preferably narrow, and SFD (switching field distribution) and SFDr are preferably 0.6 or less.

The squareness ratio of a magnetic disc is from 0.55 to 0.67, preferably from 0.58 to 0.64, in the case of two dimensional random orientation, from 0.45 to 0.55 in the case of three dimensional random orientation, and in the case of perpendicular orientation generally 0.6 or more in the perpendicular direction, preferably 0.7 or more, and 0.7 or more when diamagnetic correction is performed, preferably 0.8 or more. The degree of orientation in two-dimensional random orientation and three-dimensional random orientation is preferably 0.8 or more. In the case of two-dimensional random orientation, the squareness ratio in the perpendicular direction, the Br in the perpendicular direction, and the Hc in the perpendicular direction are preferably from 0.1 to 0.5 times as small as those in the in-plane direction.

A magnetic disc in the invention has a surface intrinsic viscosity of a magnetic layer of preferably from 10⁴ to 10¹² Ω/sq, and a charge potential of preferably from -500 V to +500 V. The elastic modulus at 0.5% elongation of a magnetic layer is preferably from 100 to 2,000 kg/mm2 (from 980 to 19,600 MPa) in every direction of in-plane, the breaking strength is preferably from 10 to 70 kg/mm² (from 98 to 686 MPa), the elastic modulus of a magnetic disc is preferably from 100 to 1,500 kg/mm² (from 980 to 14,700 MPa) in every direction of in-plane, the residual elongation is preferably 0.5% or less, and the thermal shrinkage factor at every temperature of 100°C or less is preferably 1% or less, more preferably 0.5% or less, and most preferably 0.1% or less. The glass transition temperature of a magnetic layer (the maximum point of the loss elastic modulus by dynamic viscoelasticity measurement at 110 Hz) is preferably from 50°C to 120°C, and that of a lower layer is preferably from 0°C to 100°C. The loss elastic modulus is preferably in the range of from 1x10⁷ to 8x10⁸ Pa, and the loss tangent is preferably 0.2 or less. When the loss tangent is too large, adhesion failure is liable to occur. These thermal and mechanical characteristics are preferably almost equal in every direction of the in-plane of the medium with difference of not more than 10%. The residual amount of a solvent in a magnetic layer is preferably 100 mg/m² or less, more preferably 10 mg/m² or less. The void ratio of a coated layer is preferably 30% by volume or less, more preferably 20% by volume or less, with both of a lower layer and an upper layer. The void ratio is preferably smaller for obtaining high output but in some cases a specific value should be preferably secured according to purposes. For example, in a disc medium that is repeatedly used, large void ratio contributes to good running durability in many cases.

The surface of a magnetic layer has a central plane average surface roughness (Ra) measured with a surface roughness meter TOPO-3D (a product of Veeco) of preferably 5.0 nm or less, more preferably 4.0 nm or less, and especially preferably 3.5 nm or less. A magnetic layer preferably has a maximum height (Rmax) of 0.5 µm or less, a ten point average roughness (Rz) of 0.3 µm or less, a central plane peak height (Rp) of 0.3 µm or less, a central plane valley depth (Rv) of 0.3 µm or less, a central plane area factor (Sr) of from 20 to 80%, and average wavelength (λa) of from 5 to 300 µm. The surface spines of a magnetic layer of sizes of from 0.01 to 1 µm can be controlled arbitrarily within the range of from 0 to 2,000, and it is preferred to optimize the surface spines. The surface spines can be easily controlled by the control of the surface property of a support by using fillers, the particle size and the amount of the magnetic powders added to a magnetic layer, or by the surface configurations of the rolls of calender treatment. Curing is preferably within ±3 mm. It can be easily presumed that these physical characteristics of a magnetic disc in the invention can be varied according to purposes in a lower layer and an upper layer. For example, the elastic modulus of an upper layer is made higher to improve running durability and at the same time the elastic modulus of a lower layer is made lower that that of the upper layer to improve the head touching of the magnetic disc.

### EXAMPLES

The present invention is described in detail with reference to examples, but the invention is not limited thereto. In the following, "parts" means "mass parts" unless otherwise indicated.

### Manufacture of Coating Solution:

| Magnetic layer coating solution | |
|---|---|
| Barium ferrite magnetic powder | 100 parts |
| Surface-covering compound: Al₂O₃, 6 mass% in the entire particles | |
| Coercive force (Hc): 166 kA/m (2,500 Oe) | |
| Average tabular size: 0.021 µm | |
| Average tabular ratio: 3 | |
| Saturation magnetization (σₛ): 50 A·m²/kg (emu/g) | |
| Polyurethane resin | 10 parts |
| UR 8200 (manufactured by Toyobo Co., Ltd.) | |
| Abrasive | 3 parts |
| Diamond (average particle size: 100 nm, coefficient of variation: 20%) | |
| Carbon black (average particle size: 60 nm) | 5 parts |
| Butyl stearate | 4 parts |
| Hexadecyl stearate | 4 parts |
| Stearic acid | 2 parts |
| Methyl ethyl ketone | 125 parts |
| Cyclohexanone | 125 parts |

| Lower layer coatinq solution | |
|---|---|
| Nonmagnetic inorganic powder | 75 parts |
| Acicular α-Fe₂O₃ | |
| Average long axis length: 0.08 µm | |
| Average acicular ratio: 5 | |
| Carbon black | 20 parts |
| Conductex SC-U (manufactured by Columbia Carbon Co., Ltd.) | |
| Polyurethane | 12 parts |
| Glass transition temperature (Tg): 70°C | |
| Phenylphosphonic acid | 4 parts |
| Butyl stearate | 3 parts |
| Hexadecyl stearate | 3 parts |
| Stearic acid | 3 parts |
| Methyl ethyl ketone/cyclohexanone | 250 parts |
| (8/2 mixed solvent) | |

### Manufacture of Magnetic Discs A to D:

Each component of the above magnetic layer coating solution and lower layer coating solution was kneaded in a kneader and then dispersed in a sand mill with Zr beads having a diameter of 0.3 mm for 12 hours. Polyisocyanate was added in an amount of 2.5 parts to the dispersion of the lower layer coating solution and 3 parts to the dispersion of the magnetic layer coating solution. Further, 40 parts of cyclohexanone was added to each solution, and each solution was filtered through a filter having an average pore diameter of 1 µm to obtain coating solutions for forming a lower layer and a magnetic layer. The obtained lower layer coating solution was coated in a dry thickness of 1.4 µm on a polyethylene naphthalate support, after the coated lower layer coating solution was dried, the magnetic layer coating solution was coated thereon in a dry thickness of 0.1 µm by successive multilayer-coating. The polyethylene naphthalate support had a thickness of 50 µm, a central plane average surface roughness of 2 nm, and a thickness variation of 2%. The coated layers were subjected to calendering treatment with a calender of seven stages comprising metal rolls alone at a rate of 200 m/min at 85°C. The obtained web was punched to sizes of 0.75 inches, 1.0 inch and 1.5 inches, and each disc was subjected to surface treatment with an alumina abrasive tape, whereby magnetic discs A, B and C were obtained respectively.

In the next place, disc D was manufactured in the same manner as the production of disc B except for using the ferromagneticalloypowder shown below in place of barium ferrite magnetic powder.

### Ferromagnetic alloy powder

Composition: Fe 70%, Co 30%
Sintering preventing agent:
   Al compound (Al/Fe atomic ratio: 8%)
   Y compound (Y/Fe atomic ratio: 8%)
Coercive force (Hc): 166 kA/m (2,500 Oe)
Long axis length: 0.060 µm
Acicular ratio: 5
Saturation magnetization (σₛ): 110 A-m²/kg (emu/g)

The characteristics of the obtained samples were evaluated as shown below. The results obtained are shown in Table 1 below.

### 1) SN ratio

Read-write analyzer RWA1632 (manufactured by Guzik Technical Enterprises, U.S.A.), Spin Stand LS-90 (manufactured by Kyodo Denshi System Co., Ltd.), and a composite type AMR head having a write-in track width of 1.5 µm, and a read-out width of 1. 0 µm were used in the measurement of SN ratio. Signals were recorded on a magnetic disc and reproduced by changing the recording frequency to 200 kfci and 300 kfci at a prescribed disc position (outside periphery and inside periphery) and at prescribed rotation. The waveform of the reproduced signal was taken in a spectrum analyzer and output was found, and noise was obtained by integrating the double region of the recording frequency. The ratio of this output and the noise was taken as the SN ratio.

### 2) Durability

Read-write analyzer RWA1632 (manufactured by Guzik Technical Enterprises, U.S.A.), Spin Stand LS-90 (manufactured by Kyodo Denshi System Co., Ltd.), and a composite type AMR head having a write-in track width of 1.5 µm, and a read-out width of 1.0 µm were used in the measurement of durability. The entire region of recording area was sought randomly, and dropout was measured every 24 hours. The time when a defect of the length of 300 µm or more, where the output lowered 30% or more, was observed was taken as the duration life of the disc.

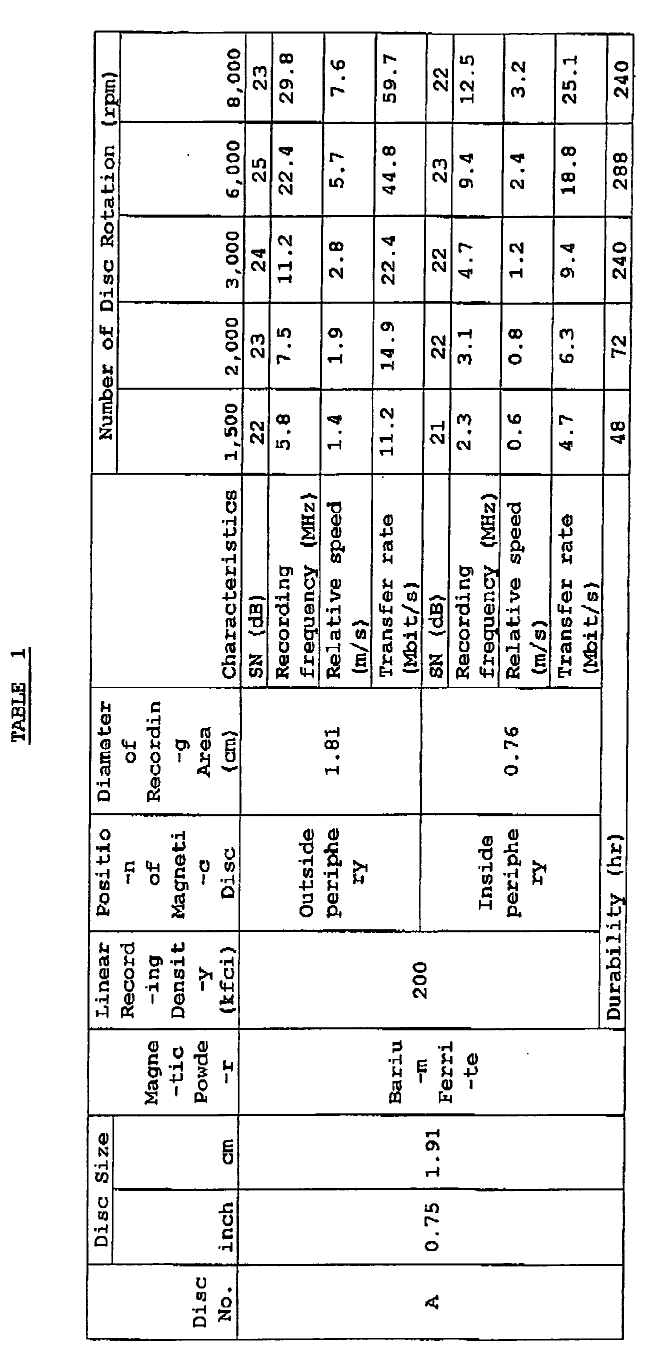

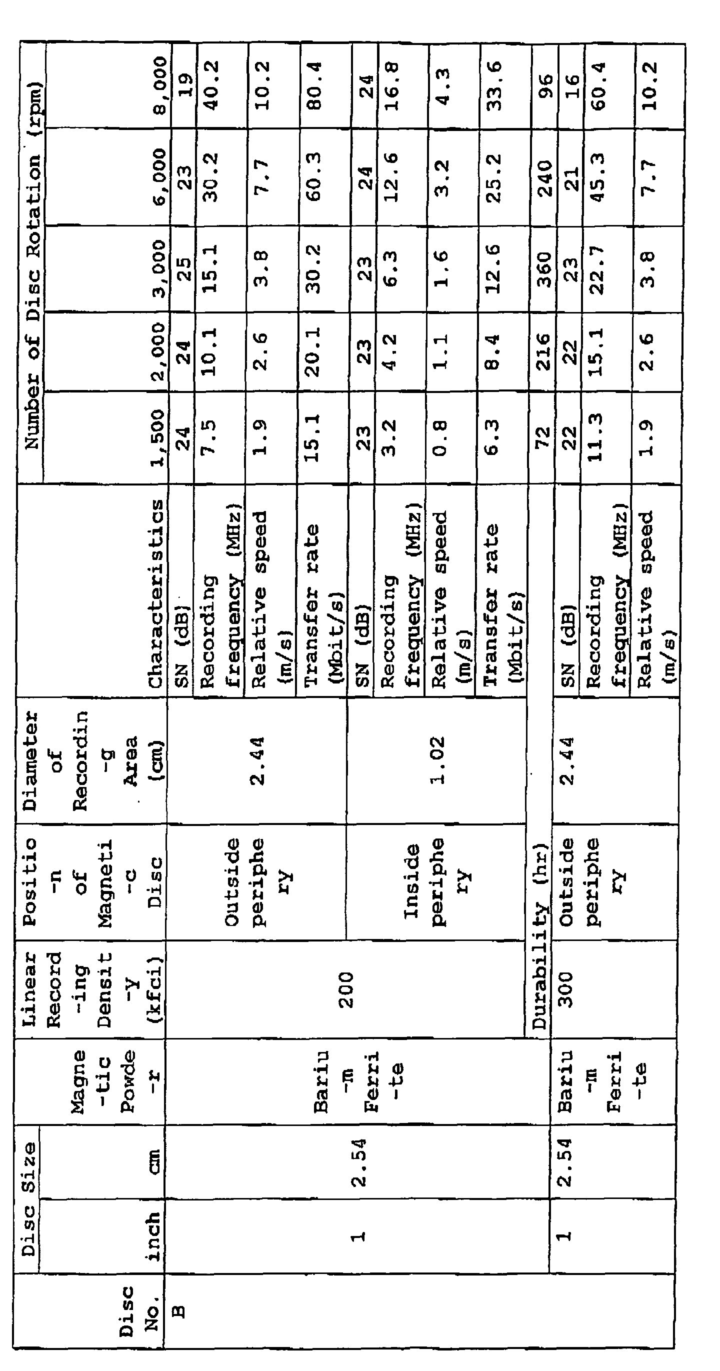

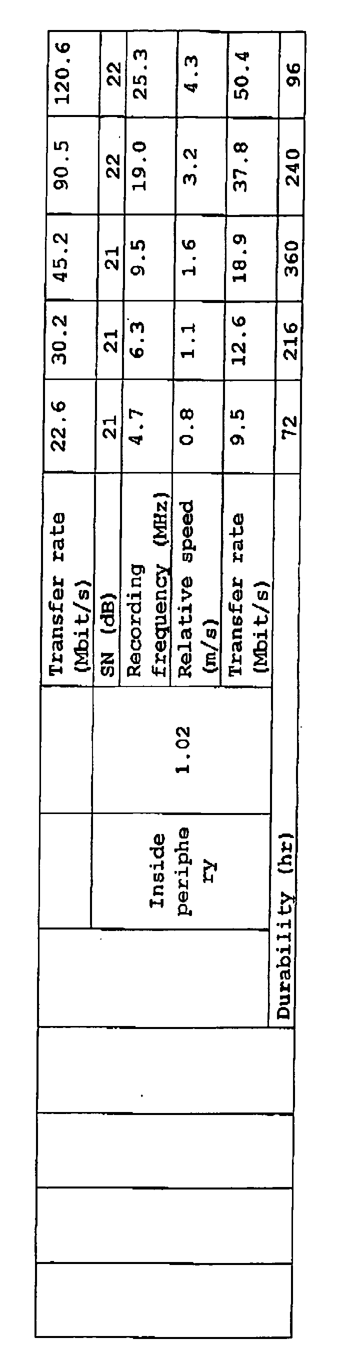

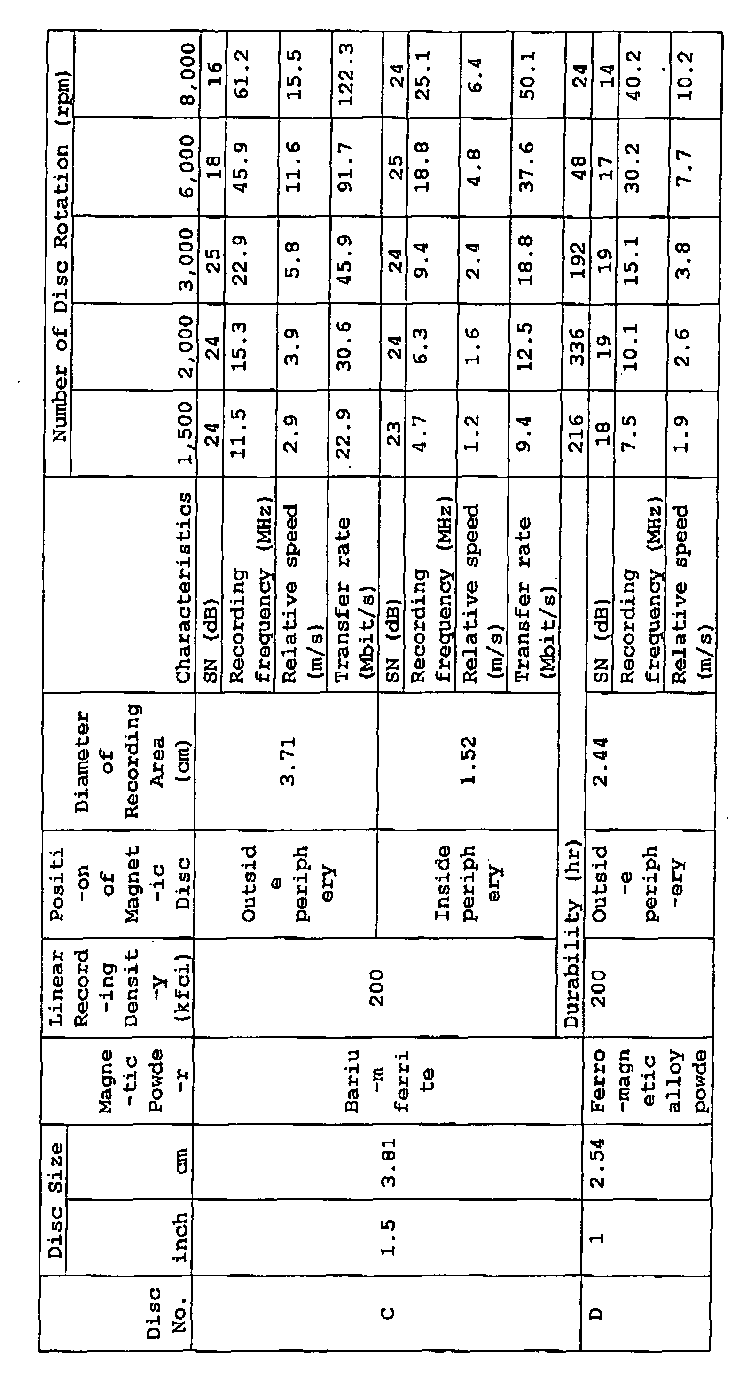

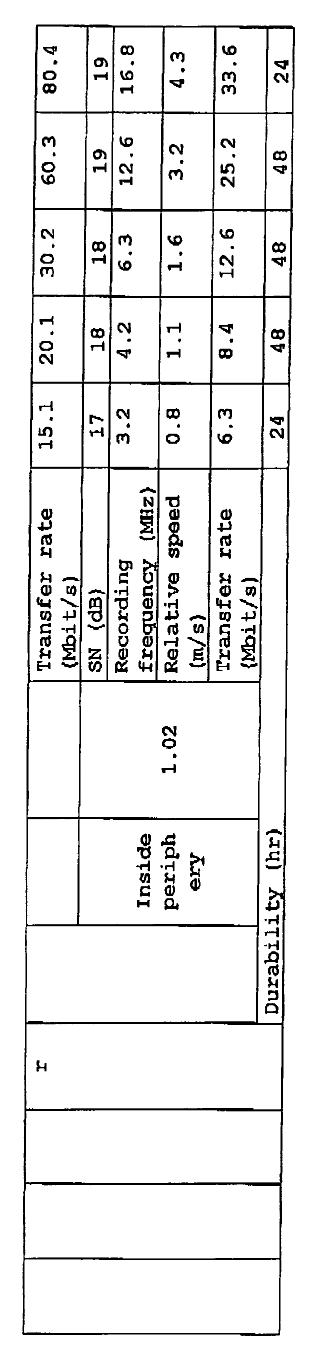

It can be seen that the media in the invention are excellent in SN ratio and durability. When the relative speed is lower than 1.0 m/s or exceeding 8 m/s, not only durability extremely deteriorates but also SN ratio greatly decreases. Further, in a magnetic disc in which ferromagnetic alloy powder is used, both durability and SN ratio are inferior even if the relative speed is in the range of the invention. The magnetic disc in the invention using hexagonal ferrite magnetic powders has a diameter of from 1.91 to 3.81 cm (from 0.75 to 1.5 inches) suitable for miniaturized recording and reproducing devices, capable of high speed recording of 8 Mbi t/s or more and high speed transfer, and capable of handling sufficiently high quality motion pictures. The magnetic disc in the invention shows a sufficiently practicable SN ratio of 20 dB or higher with a track width of 1.5 µm and at linear recording density of 300 kfci, which recording corresponds to 0.78 Gbit/cm² (about 5 Gbit/inch²), so that sufficient capacity can be realized even with a diameter of from 1.91 to 3.81 cm (from 0.75 to 1.5 inches) .

This application is based on Japanese Patent application JP 2004-30730, filed February 6, 2004, the entire content of which is hereby incorporated by reference, the same as if set forth at length.

## Claims

1. A method comprising recording or reproducing a magnetic disc with a recording head or a reproducing head, the magnetic disc having a diameter of from 1.91 to 3.81 cm and comprising, in this order, a flexible support, a substantially nonmagnetic lower layer and a magnetic layer containing hexagonal ferrite magnetic powder and a binder,
wherein relative speeds in all recording area of the magnetic disc are within a range of from 1.0 to 8.0 m/s when the recording or reproducing is conducted.

2. The method according to claim 1, wherein a minimum transfer rate is 8 Mbit/s or more.

3. The method according to claim 1, wherein relative speeds in all recording area of the magnetic disc are within a range of from 1.5 to 5.0 m/s when the recording or reproducing is conducted.

4. The method according to claim 1, wherein the hexagonal ferrite magneticpowder is one selected from the group consisting of barium ferrite, strontium ferrite, lead ferrite, calcium ferrite and substitution products of those ferrites.

5. The method according to claim 1, wherein the lower layer has a residual magnetic flux density of 100 mT or less.

6. The method according to claim 1, wherein the lower layer has a coercive force of 100 Oe or less.
